# EUROPEAN PATENT APPLICATION

(11) **EP 3 275 835 A1**
(43) Date of publication of application: **31.01.2018**
(21) Application number: 16767645.1
(22) Date of filing: 26.02.2016
(51) Int. Cl.: C01B 3/38, C01B 31/18

(54) **ONLINE FURNACE DRYING METHOD FOR HEAT-INSULATION NATURAL GAS CATALYTIC OXIDIZING FURNACE**

(30) Priority: 25.03.2015 CN 201510133393
(71) Applicant: Wuhan Kaidi Engineering Technology Research Institute Co., Ltd., Wuhan, Hubei 430212 (CN)
(72) Inventor: CHEN, Yilong, Wuhan Hubei 430212 (CN); ZHANG, Yanfeng, Wuhan Hubei 430212 (CN); KUAI, Pingyu, Wuhan Hubei 430212 (CN); TIAN, Wentang, Wuhan Hubei 430212 (CN); WANG, Daxiang, Wuhan Hubei 430212 (CN)
(74) Representative: Zeuner Summerer Stütz
(86) International application number: PCT/CN2016/074636
(87) International publication number: WO 2016/150268

(57) **Abstract**

Disclosed is an online furnace drying method for a heat-insulation natural gas catalytic oxidizing furnace, comprising: (1) simultaneously introducing oxygen, natural gas and temperature-control gas capable of decreasing a reaction heating rate into a natural gas catalytic oxidizing furnace, controlling a molar ratio of the oxygen to the natural gas at (0.3-0.6): 1, and meanwhile, controlling a molar ratio of the temperature-control gas to raw material gas consisting of the oxygen and the natural gas at (0.1-7):(1.3-1.6); (2) preheating the mixed gas so as to gradually increase the temperature, and stopping the preheating until the temperature reaches an oxidation triggering temperature; and (3) gradually decreasing the molar ratio of the temperature-control gas to the raw material gas, allowing the reaction temperature to increase at a heating rate meeting the requirement of a designed furnace drying curve, and stopping the introduction of the temperature-control gas until the reaction temperature reaches a working temperature. The present invention solves the problem that the temperature rises excessively fast during the furnace heating process, prevents a heat-insulation fire-resisting material from being cracked due to shock heating, and protects the natural gas catalytic oxidizing furnace, so that the natural gas catalytic oxidizing furnace can be stably transitioned to a normal operation state.

## Description

### BACKGROUND OF THE INVENTION

### Field of the Invention

The invention relates to processing technology of a catalytic oxidation furnace, and more particularly to an online drying method of an adiabatic catalytic oxidation furnace of natural gas.

### BACKGROUND OF THE INVENTION

With reducing proved reserves of petroleum and gradual depletion of exploitable resources, a technology of producing automobile liquefied fuel by taking coal, natural gas and biomass as raw materials through indirect conversion has been popularized gradually, for example, a coal-to-liquids technology of South Africa, a gas-to-liquids technology of Malaysia and Qatar, a coal-to-liquids technology of Shenhua Group, etc. Improvement of natural gas production is now changing a structure of mineral energy along successful development and large-scale industrial application of shale gas development technology, thereby bringing broad prospect to comprehensive utilization of natural gas. Comprehensive utilization of natural gas is to transform it into an intermediate productsynthetic gas first, and further produce the chemicals through a synthetic technology, such as hydrogen, synthesis ammonia, urea, methanol, olefin, paraffin, acetic acid and its derivatives, or synthetic liquefied fuel, such as diesel oil, gasoline, aviation kerosene or other products with high added values.

In traditional synthetic gas devices by means of the conversion of natural gas, a light hydrocarbon steam reforming method or natural auto-thermal reforming method is usually taken as the gas manufacturing process, and a hydrogen production unit of a large synthetic ammonia plant or an oil refinery or a petrochemical plant is usually used. Natural gas, dry gas or naphtha is taken as raw material to produce a synthetic gas of CO and hydrogen, and accordingly to produce the liquefied fuel on the basis of main principle of producing CO as much as possible; but a H₂/CO in the outtake product gas is usually more than 3 if the traditional light hydrocarbon steam reforming method or natural auto-thermal reforming method is used, which indicates that this gas cannot be applied to synthesis before excessive hydrogen is removed or a ratio of hydrogen to carbon is adjusted through supplementing CO₂ to a feed gas.

Partial oxidation of natural gas is a new process of producing synthetic gas from natural gas and also includes catalytic oxidation and noncatalytic oxidation in accordance with whether to use catalyst, wherein in catalytic oxidation, methane acts with oxygen on a catalyst bed, as shown in following formula:

CH₄+1/2O₂=CO+2H₂

This reaction is implemented in a heat insulation reactor, without heating. Further, this reaction can also produce a plenty of high-temperature high-pressure steam, and the H₂/CO of the product gas is approximately equal to 2: 1; and the product gas can be applied to preparation of liquefied fuel directly without methods, such as transformation or supplementation of carbon.

Catalytic oxidation of natural gas is implemented in an adiabatic catalytic oxidation furnace of natural gas which has a pressure-loaded metal shell; heat insulation refractory materials are placed in the furnace. When the furnace runs normally, its temperature can achieve 800°C, and even 1300°C and above under certain extreme situation. All kinds of heat insulation refractory materials have specific heating curve, namely drying-out curve. In order to ensure performance of the heat insulation refractory materials in the adiabatic catalytic oxidation furnace of natural gas, a reaction temperature of gas in the furnace shall be controlled to make the rate of meeting the requirement of drying-out curve of the adiabatic catalytic oxidation furnace of natural gas increase gradually and slowly. However, along increasing temperature of the feed gas entering into the adiabatic catalytic oxidation furnace of natural gas, the catalytic oxidation shall be started instantaneously when the temperature achieves a firing point for reaction of a catalyst; and the temperature shall be increased quickly, thereby making the temperature of a reaction gas achieve 800°C and above instantaneously, and the temperature of the adiabatic catalytic oxidation furnace of natural gas out of control during heating stage. While the heat insulation refractory materials in the adiabatic catalytic oxidation furnace of natural gas are usually fragile materials, and may generate stress easily when meeting such a violent heating, thereby generating crack and accordingly leading to reduction or failure of oxidation furnace efficiency.

So far, the study to catalytic oxidation of natural gas mainly focuses on screening, preparation and other aspects of catalyst, for example, U. S. Pat. No. US6946114 B2 reported a formula and reaction performance of catalyst for catalytic oxidation of natural gas. However, how to effectively control temperature in a catalytic oxidation furnace of natural gas in order to protect the catalytic oxidation furnace of natural gas and make it transit to the normal running state stably is still a blank space.

### SUMMARY OF THE INVENTION

In view of the above-described problems, it is one objective of the invention to provide an online drying method of an adiabatic catalytic oxidation furnace of natural gas; this method reduces temperature fluctuations of the catalytic oxidation furnace of natural gas during the online drying period, thereby avoiding the crack of a refractory material liner in the furnace and ensuring the oxidation furnace smoothly enters a normal running state.

To achieve the above objective, in accordance with one embodiment of the invention, there is provided an online drying method for an adiabatic catalytic oxidation furnace of natural gas, the method comprising:
1) charging a feed gas comprising oxygen and natural gas, and a temperature control gas capable of reducing reaction temperature rising rate to a catalytic oxidation furnace of natural gas loaded with a catalyst, wherein a molar ratio of the oxygen to the natural gas in the feed gas is 0.3-0.6: 1, and a molar ratio of the temperature control gas to the feed gas is 0.1-7: 1.3-1.6;
2) preheating a mixed gas comprising the feed gas and the temperature control gas in 1) to gradually enhance a temperature of the mixed gas, and stopping preheating when the temperature of the mixed gas achieves an oxidation reaction triggering temperature; and
3) within the molar ratio described in 1), gradually reducing the molar ratio of the temperature control gas to the feed gas so that a rise of the temperature of the mixed gas conforms to a temperature rising rate of a drying-out curve of a heat insulation refractory material in the catalytic oxidation furnace of natural gas, and stopping charging the temperature control gas when the reaction temperature achieves the working temperature of the catalytic oxidation furnace.

In a class of this embodiment, in 3), while gradually reducing the molar ratio of the temperature control gas to the feed gas, the method further comprises adjusting the molar ratio of the oxygen to the natural gas in the feed gas so that the rise of the temperature of the mixed gas conforms to the temperature rising rate of the drying-out curve of the heat insulation refractory material in the catalytic oxidation furnace of natural gas.

In a class of this embodiment, in 1), the temperature control gas is an inert gas, N₂, CO₂, water vapor, or a mixture thereof.

In a class of this embodiment, in 2), the oxidizing reaction triggering temperature is between 300 and 600°C.

In a class of this embodiment, in 3), while gradually reducing the molar ratio of the temperature control gas to the feed gas, the method further comprises enhancing the molar ratio of the oxygen to the natural gas in the feed gas so that the rise of the temperature of the mixed gas conforms to the temperature rising rate of the drying-out curve of the heat insulation refractory material in the catalytic oxidation furnace of natural gas.

In a class of this embodiment, in 3), the molar ratio of the temperature control gas to the feed gas is reduced from 7: 1.3-1.6 to 0-5: 1.3-1.6 when the temperature of the mixed gas is increased to 750°C from 280°C.

In a class of this embodiment, in 3), the molar ratio of the temperature control gas to the feed gas is reduced from 5.1-7: 1.4-1.6 to 0-5: 1.4-1.6, and the molar ratio of the oxygen to the natural gas in the feed gas is increased from 0.3-0.4: 1 to 0.41-0.6: 1 when the temperature of the mixed gas is increased to 750°C from 280°C.

Advantages of the online drying method for an adiabatic catalytic oxidation furnace of natural gas of the present disclosure are summarized as follows:
1. The method reduces the reaction ratio and take away one part of heat by doping the feed gas with the temperature control gas without combustion characteristics or combustion-supporting characteristics and using the temperature control gas, and controls the reaction temperature by controlling the molar ratio of the temperature control gas appropriately during the heating stage, thereby reducing fluctuation range of temperature in the oxidation furnace during online drying/starting period, avoiding easily shock heating in the furnace during oxidation reaction, making the reaction temperature of the mixed gas to rise according to the temperature rising rate required by the designed drying-out curve of the heat insulation refractory material in the catalytic oxidation furnace of natural gas and implementing controllable heating curve of the catalytic oxidation furnace of natural gas, and accordingly avoiding crack of heat insulation refractory materials due to shock heating, protecting the catalytic oxidation furnace of natural gas and making it transit to the normal running state stably.
2. The feed gas is mixed with the temperature control gas without combustion characteristics or combustion-supporting characteristics in the invention, and the reaction temperature is controlled by appropriately controlling the mole proportion of the temperature control gas and adjusting the molar ratio of the natural gas to the oxygen during heating stage; accordingly, the invention provides one controllable and relatively moderate online drying method of the catalytic oxidation furnace of natural gas, thereby avoiding reduction or failure of efficiency of the oxidation furnace due to crack generated more effectively.
3. The method in the invention can control the range of heating during online drying/starting process and reduce the risk of carbon deposit of the adiabatic catalytic oxidation furnace of natural gas, thereby making the oxidation furnace transit to the normal running state stably.

### BRIEF DESCRIPTION OF THE DRAWINGS

FIG. **1** is a drying-out curve of a heat insulation refractory material in the prior art;
FIG. **2** is a change chart of temperature of a gas discharged from a catalyst bed with the variation of the flow rate of N₂ in Example **1;**
FIG. **3** is a change chart of temperature of a gas discharged from a catalyst bed with the variation of the flow rate of Helium in Example **2;**
FIG. **4** is a change chart of temperature of a gas discharged from a catalyst bed with the variation of the flow rate of CO₂ in Example **3;**
FIG. **5** is a change chart of temperature of a gas discharged from a catalyst bed with the variation of the flow rate of N₂ in Example **4;**
FIG. **6** is a change chart of temperature of a gas discharged from a catalyst bed with the variation of the flow rate of H₂O in Example **5;** and
FIG. **7** is a change chart of temperature of a gas discharged from a catalyst bed with the variation of the flow rate of Argon in Example **6.**

### DETAILED DESCRIPTION OF THE EMBODIMENTS

For further illustrating the invention, experiments detailing an online drying method for an adiabatic catalytic oxidation furnace of natural gas are described hereinbelow combined with the drawings. It should be noted that the following examples are intended to describe and not to limit the invention.

### Example 1

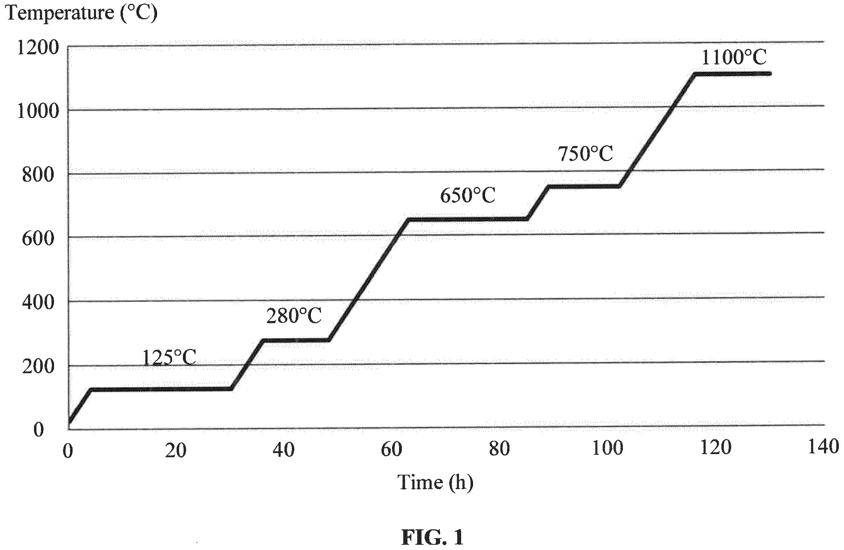

First, N₂, natural gas and oxygen were injected to a dried catalytic oxidation furnace of natural gas loaded with a noble metal catalyst, where the natural gas comprised more than 99.9% (v/v) methane; the flow rate of the natural gas was 1 kmol/h; the purity of the oxygen exceeded 99.9%; the flow rate of the oxygen was 0.6 kmol/h; the purity of the N₂ exceeded 99.9%; and the flow rate of the N₂ was 7 kmol/h. Thereafter, the mixed gas comprising the N₂, natural gas and oxygen was preheated to 300°C to trigger the catalytic oxidation; stop preheating, and gradually reduce the flow rate of the nitrogen until the flow rate of the nitrogen became 0, so that the rise of the reaction temperature of the mixed gas conforms to the temperature rising rate of the designed drying-out curve of the heat insulation refractory material in the catalytic oxidation furnace of natural gas. Specifically, the temperature rose steadily to 1115°C which was the normal working temperature of the catalytic oxidation furnace. The drying-out curve of the heat insulation refractory material in the catalytic oxidation furnace of natural gas is shown in FIG. 1.

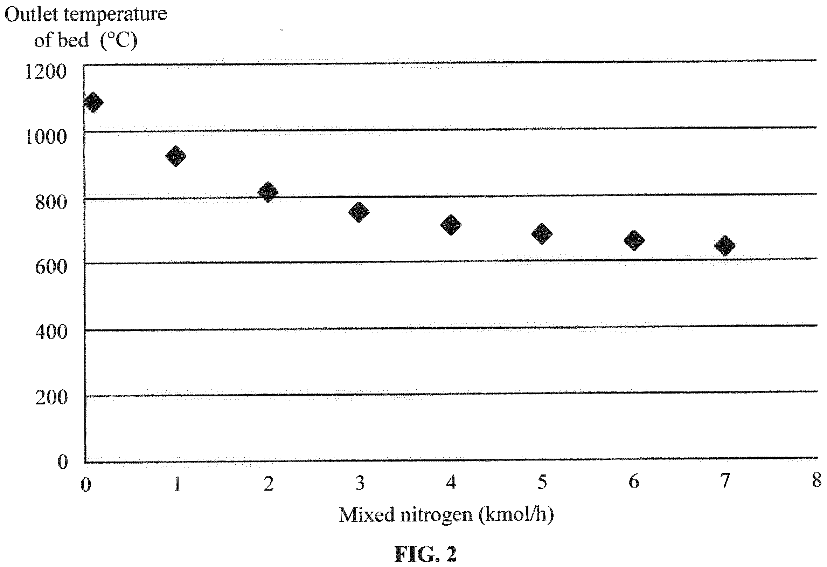

During the drying stage, with the reduction of the flow rate of the N₂, the temperature of the gas discharged from the catalyst bed is shown in FIG 2 when the flow rates of the N₂ are 7 kmol/h, 6 kmol/h, 5 kmol/h, 4 kmol/h, 3 kmol/h, 2 kmol/h, 1 kmol/h and 0.1 kmol/h. As shown in FIG. 2, the gas temperature in the furnace increases steadily with the reduction of the flow rate of the N₂, without shock heating; and the molar ratio of the natural gas to the oxygen to the N₂ is shown in Table 1 in each insulating stage of drying.

**Table 1**

| Drying temperature/°C | 125 | 280 | 650 | 750 | 1100 |
|---|---|---|---|---|---|
| Example 1 CH₄: O₂: N₂ | 1: 0.6: 7 | 1: 0.6: 7 | 1: 0.6: 6.5 | 1: 0.6: 3 | 1: 0.6: 0.05 |
| Example 2 CH₄: O₂: He | 1: 0.3: 7 | 1: 0.3: 7 | 1: 0.3: 5 | 1: 0.3: 0.3 | - |
| Example 3 CH₄: O₂: CO₂ | 1: 0.4: 7 | 1: 0.4: 7 | 1: 0.4: 1 | 1: 0.4: 0.1 | - |
| Example 4 CH₄: O₂: N₂ | 1: 0.4: 4 | 1: 0.4: 4 | 1: 0.45: 3 | 1: 0.51: 1 | 1: 0.6: 0.05 |
| Example 5 CH₄: O₂: H₂O | 1: 0.4: 4 | 1: 0.4: 4 | 1: 0.4: 2 | 1: 0.47: 1.5 | 1: 0.56: 0.3 |
| Example 6 CH₄: O₂: Ar | 1: 0.4: 3.5 | 1: 0.4: 3.5 | 1: 0.4: 3 | 1: 0.5: 1.2 | 1: 0.6: 0.1 |

### Example 2

First, Helium, natural gas and oxygen were injected to a dried catalytic oxidation furnace of natural gas loaded with a noble metal catalyst, where the natural gas comprised more than 99.9% (v/v) methane; the flow rate of the natural gas was 1 kmol/h; the purity of the oxygen exceeded 99.9%; the flow rate of the oxygen was 0.3 kmol/h; the purity of the Helium exceeded 99.9%; and the flow rate of the Helium was 7 kmol/h. Thereafter, the mixed gas comprising the Helium, natural gas and oxygen was preheated to 550°C to trigger the catalytic oxidation; stop preheating, and gradually reduce the flow rate of the Helium until the flow rate of the Helium became 0, so that the rise of the reaction temperature of the mixed gas conforms to the temperature rising rate of the designed drying-out curve of the heat insulation refractory material in the catalytic oxidation furnace of natural gas. Specifically, the temperature rose steadily to 760°C which was the normal working temperature of the catalytic oxidation furnace. The drying-out curve of the heat insulation refractory material in the catalytic oxidation furnace of natural gas is shown in FIG. 1.

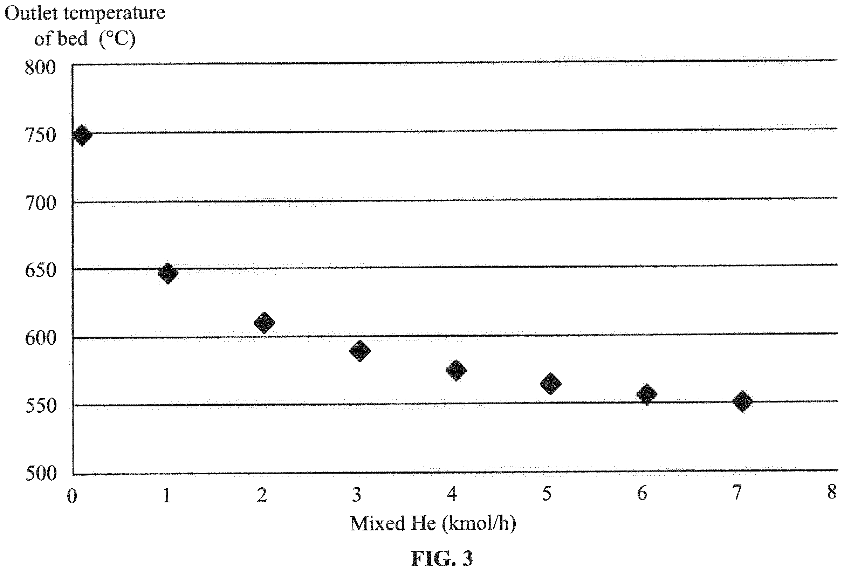

During the drying stage, with the reduction of the flow rate of the Helium, the temperature of the gas discharged from the catalyst bed is shown in FIG. 3 when the flow rates of the Helium are 7 kmol/h, 6 kmol/h, 5 kmol/h, 4 kmol/h, 3 kmol/h, 2 kmol/h, 1 kmol/h and 0.1 kmol/h. As shown in FIG 3, the gas temperature in the furnace increases steadily with the reduction of the flow rate of the Helium, without shock heating; and the molar ratio of the natural gas to the oxygen to the Helium is shown in Table 1 in each insulating stage of drying.

### Example 3

First, CO₂, natural gas and oxygen were injected to a dried catalytic oxidation furnace of natural gas loaded with a noble metal catalyst, where the natural gas comprised more than 99.9% (v/v) methane; the flow rate of the natural gas was 1 kmol/h; the purity of the oxygen exceeded 99.9%; the flow rate of the oxygen was 0.4 kmol/h; the purity of the CO₂ exceeded 99.9%; and the flow rate of the CO₂ was 7 kmol/h. Thereafter, the mixed gas comprising the CO₂, natural gas and oxygen was preheated to 600°C to trigger the catalytic oxidation; stop preheating, and gradually reduce the flow rate of the CO₂ until the flow rate of the CO₂ became 0, so that the rise of the reaction temperature of the mixed gas conforms to the temperature rising rate of the designed drying-out curve of the heat insulation refractory material in the catalytic oxidation furnace of natural gas. Specifically, the temperature rose steadily to 760°C which was the normal working temperature of the catalytic oxidation furnace. The drying-out curve of the heat insulation refractory material in the catalytic oxidation furnace of natural gas is shown in FIG. 1.

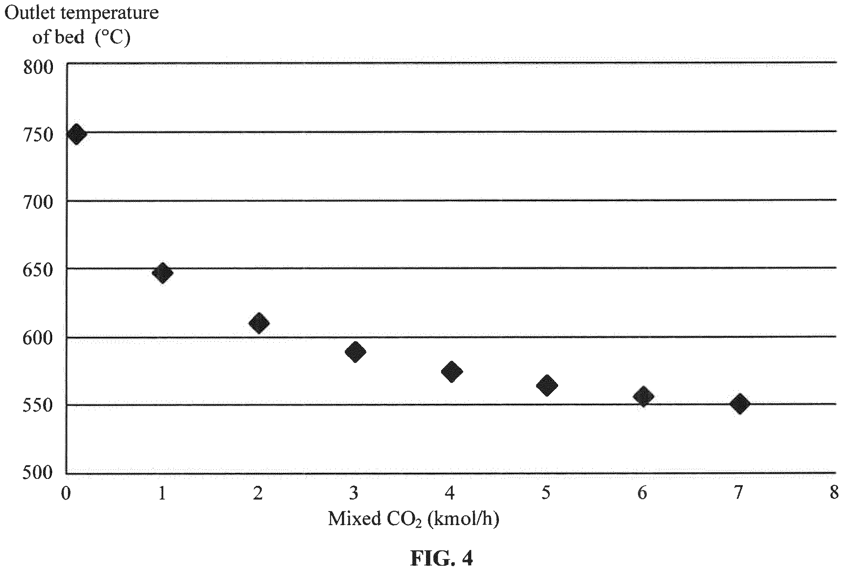

During the drying stage, with the reduction of the flow rate of the CO₂, the temperature of the gas discharged from the catalyst bed is shown in FIG 4 when the flow rates of the CO₂ are 7 kmol/h, 6 kmol/h, 5 kmol/h, 4 kmol/h, 3 kmol/h, 2 kmol/h, 1 kmol/h and 0.1 kmol/h. As shown in FIG 4, the gas temperature in the furnace increases steadily with the reduction of the flow rate of the CO₂, without shock heating; and the molar ratio of the natural gas to the oxygen to the CO₂ is shown in Table 1 in each insulating stage of drying.

### Example 4

First, N₂, natural gas and oxygen were injected to a dried catalytic oxidation furnace of natural gas loaded with a noble metal catalyst, where the natural gas comprised more than 99.9% (v/v) methane; the flow rate of the natural gas was 1 kmol/h; the purity of the oxygen exceeded 99.9%; the flow rate of the oxygen was 0.3 kmol/h; the purity of the N₂ exceeded 99.9%; and the flow rate of the N₂ was 7 kmol/h. Thereafter, the mixed gas comprising the N₂, natural gas and oxygen was preheated to 300°C to trigger the catalytic oxidation; stop preheating, and gradually reduce the flow rate of the nitrogen and regulate the molar ratio of the natural gas to the oxygen, so that the rise of the reaction temperature of the mixed gas conforms to the temperature rising rate of the designed drying-out curve of the heat insulation refractory material in the catalytic oxidation furnace of natural gas. Specifically, the temperature rose steadily to 1115°C which was the normal working temperature of the catalytic oxidation furnace, the flow rate of the nitrogen became 0, and the molar ratio of the natural gas to the oxygen was 1: 0.6. The drying-out curve of the heat insulation refractory material in the catalytic oxidation furnace of natural gas is shown in FIG. **1****.**

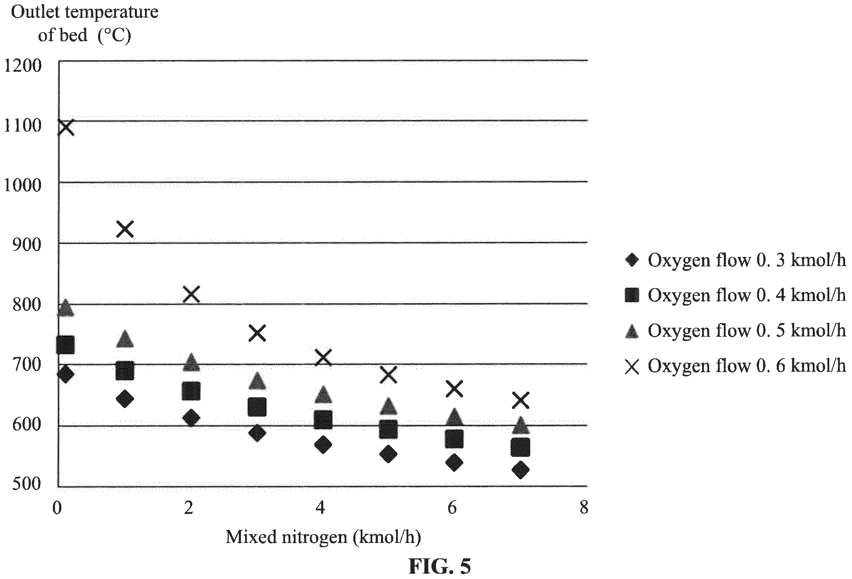

During the drying stage, with the reduction of the flow rate of the N₂ and the increase of the flow rate of the oxygen, the temperature of the gas discharged from the catalyst bed is shown in FIG. 5 when the flow rates of the N₂ are 7 kmol/h, 6 kmol/h, 5 kmol/h, 4 kmol/h, 3 kmol/h, 2 kmol/h, 1 kmol/h and 0.1 kmol/h, and the flow rates of the oxygen are 0.3 kmol/h, 0.4 kmol/h, 0.5 kmol/h, and 0.6 kmol/h. As shown in FIG. 5, the gas temperature in the furnace increases steadily with the reduction of the flow rate of the N₂ and the increase of the flow rate of the oxygen, without shock heating; and the molar ratio of the natural gas to the oxygen to the N₂ is shown in Table **1** in each insulating stage of drying.

### Example 5

First, water vapor, natural gas and oxygen were injected to a dried catalytic oxidation furnace of natural gas loaded with a noble metal catalyst, where the natural gas comprised more than 99.9% (v/v) methane; the flow rate of the natural gas was 1 kmol/h; the purity of the oxygen exceeded 99.9%; the flow rate of the oxygen was 0.3 kmol/h; the purity of the water vapor exceeded 99.9%; and the flow rate of the water vapor was 7 kmol/h. Thereafter, the mixed gas comprising the water vapor, natural gas and oxygen was preheated to 600°C to trigger the catalytic oxidation; stop preheating, and gradually reduce the flow rate of the water vapor and regulate the molar ratio of the natural gas to the oxygen, that is, gradually increase the molar percentage of the oxygen, so that the rise of the reaction temperature of the mixed gas conforms to the temperature rising rate of the designed drying-out curve of the heat insulation refractory material in the catalytic oxidation furnace of natural gas. Specifically, the temperature rose steadily to 1342°C which was the normal working temperature of the catalytic oxidation furnace, the flow rate of the water vapor became 0, and the molar ratio of the natural gas to the oxygen was 1: 0.6. The drying-out curve of the heat insulation refractory material in the catalytic oxidation furnace of natural gas is shown in FIG. **1****.**

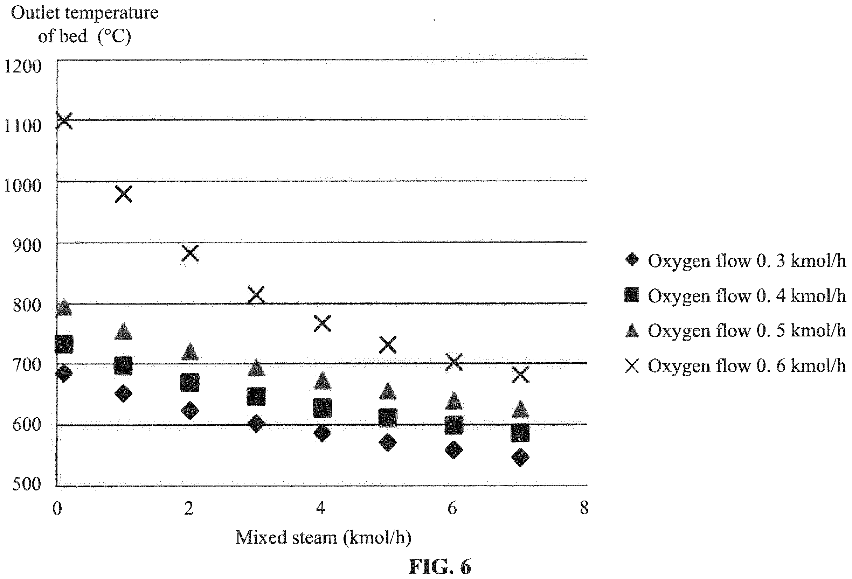

During the drying stage, with the reduction of the flow rate of the water vapor and the increase of the flow rate of the oxygen, the temperature of the gas discharged from the catalyst bed is shown in FIG. **6** when the flow rates of the water vapor are 7 kmol/h, 6 kmol/h, 5 kmol/h, 4 kmol/h, 3 kmol/h, 2 kmol/h, 1 kmol/h and 0.1 kmol/h, and the flow rates of the oxygen are 0.3 kmol/h, 0.4 kmol/h, 0.5 kmol/h, and 0.6 kmol/h. As shown in FIG. **6****,** the gas temperature in the furnace increases steadily with the reduction of the flow rate of the water vapor and the increase of the flow rate of the oxygen, without shock heating; and the molar ratio of the natural gas to the oxygen to the water vapor is shown in Table 1 in each insulating stage of drying.

### Example 6

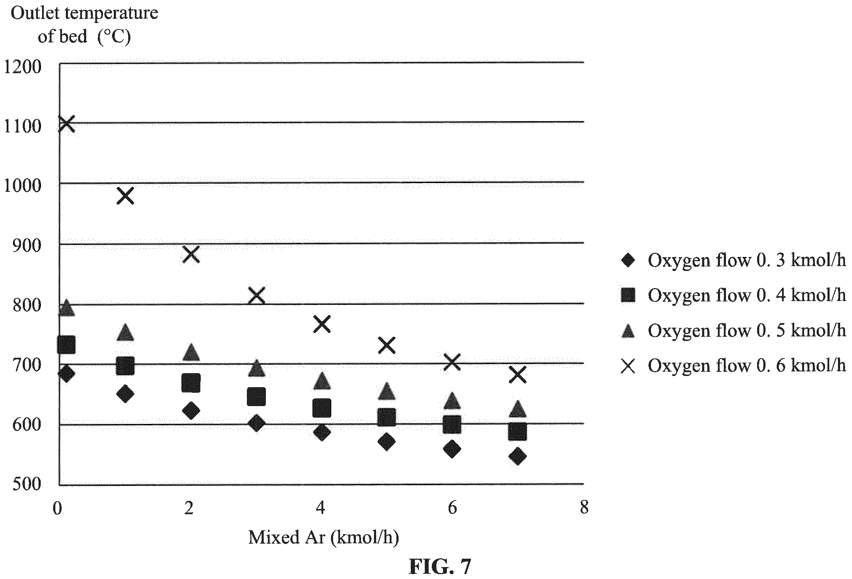

First, Argon, natural gas and oxygen were injected to a dried catalytic oxidation furnace of natural gas loaded with a noble metal catalyst, where the natural gas comprised more than 99.9% (v/v) methane; the flow rate of the natural gas was 1 kmol/h; the purity of the oxygen exceeded 99.9%; the flow rate of the oxygen was 0.3 kmol/h; the purity of the Argon exceeded 99.9%; and the flow rate of the Argon was 7 kmol/h. Thereafter, the mixed gas comprising the Argon, natural gas and oxygen was preheated to 300°C to trigger the catalytic oxidation; stop preheating, and gradually reduce the flow rate of the Argon and regulate the molar ratio of the natural gas to the oxygen, that is, gradually increase the molar percentage of the oxygen, so that the rise of the reaction temperature of the mixed gas conforms to the temperature rising rate of the designed drying-out curve of the heat insulation refractory material in the catalytic oxidation furnace of natural gas. Specifically, the temperature rose steadily to 1115°C which was the normal working temperature of the catalytic oxidation furnace, the flow rate of the Argon became 0, and the molar ratio of the natural gas to the oxygen was 1: 0.6. The drying-out curve of the heat insulation refractory material in the catalytic oxidation furnace of natural gas is shown in FIG. **1****.**
During the drying stage, with the reduction of the flow rate of the Argon and the increase of the flow rate of the oxygen, the temperature of the gas discharged from the catalyst bed is shown in FIG **7** when the flow rates of the Argon are 7 kmol/h, 6 kmol/h, 5 kmol/h, 4 kmol/h, 3 kmol/h, 2 kmol/h, 1 kmol/h and 0.1 kmol/h, and the flow rates of the oxygen are 0.3 kmol/h, 0.4 kmol/h, 0.5 kmol/h, and 0.6 kmol/h. As shown in FIG **7****,** the gas temperature in the furnace increases steadily with the reduction of the flow rate of the Argon and the increase of the flow rate of the oxygen, without shock heating; and the molar ratio of the natural gas to the oxygen to the Argon is shown in Table 1 in each insulating stage of drying.

## Claims

1. An online drying method for an adiabatic catalytic oxidation furnace of natural gas, the method comprising:
1) charging a feed gas comprising oxygen and natural gas, and a temperature control gas capable of reducing reaction temperature rising rate to a catalytic oxidation furnace of natural gas loaded with a catalyst, wherein a molar ratio of the oxygen to the natural gas in the feed gas is 0.3-0.6: 1, and a molar ratio of the temperature control gas to the feed gas is 0.1-7: 1.3-1.6;
2) preheating a mixed gas comprising the feed gas and the temperature control gas in 1) to gradually enhance a temperature of the mixed gas, and stopping preheating when the temperature of the mixed gas achieves an oxidation reaction triggering temperature; and
3) within the molar ratio described in 1), gradually reducing the molar ratio of the temperature control gas to the feed gas so that a rise of the temperature of the mixed gas conforms to a temperature rising rate of a drying-out curve of a heat insulation refractory material in the catalytic oxidation furnace of natural gas, and stopping charging the temperature control gas when the reaction temperature achieves the working temperature of the catalytic oxidation furnace.

2. The method of claim 1, **characterized in that** in 3), while gradually reducing the molar ratio of the temperature control gas to the feed gas, the method further comprises adjusting the molar ratio of the oxygen to the natural gas in the feed gas so that the rise of the temperature of the mixed gas conforms to the temperature rising rate of the drying-out curve of the heat insulation refractory material in the catalytic oxidation furnace of natural gas.

3. The method of claim 1 or 2, **characterized in that** in 1), the temperature control gas is an inert gas, N₂, CO₂, water vapor, or a mixture thereof.

4. The method of claim 1 or 2, **characterized in that** in 2), the oxidizing reaction triggering temperature is between 300 and 600°C.

5. The method of claim 1 or 2, **characterized in that** in 3), while gradually reducing the molar ratio of the temperature control gas to the feed gas, the method further comprises enhancing the molar ratio of the oxygen to the natural gas in the feed gas so that the rise of the temperature of the mixed gas conforms to the temperature rising rate of the drying-out curve of the heat insulation refractory material in the catalytic oxidation furnace of natural gas.

6. The method of claim 1 or 2, **characterized in that** in 3), the molar ratio of the temperature control gas to the feed gas is reduced from 7: 1.3-1.6 to 0-5: 1.3-1.6 when the temperature of the mixed gas is increased to 750°C from 280°C.

7. The method of claim 1 or 2, **characterized in that** in 3), the molar ratio of the temperature control gas to the feed gas is reduced from 5.1-7: 1.4-1.6 to 0-5: 1.4-1.6, and the molar ratio of the oxygen to the natural gas in the feed gas is increased from 0.3-0.4: 1 to 0.41-0.6: 1 when the temperature of the mixed gas is increased to 750°C from 280°C.

8. The method of claim 5, **characterized in that** in 3), the molar ratio of the temperature control gas to the feed gas is reduced from 5.1-7: 1.4-1.6 to 0-5: 1.4-1.6, and the molar ratio of the oxygen to the natural gas in the feed gas is increased from 0.3-0.4: 1 to 0.41-0.6: 1 when the temperature of the mixed gas is increased to 750°C from 280°C.
